# EUROPÄISCHE PATENTSCHRIFT

(11) **EP 1 659 298 B1**
(45) Veröffentlichungstag und Bekanntmachung des Hinweises auf die Patenterteilung: **01.08.2012**
(21) Anmeldenummer: 05108971.2
(22) Anmeldetag: 28.09.2005
(51) Int. Cl.: F16B 7/14, F16H 25/24

(54) **Linearantrieb**
Linear drive
Entraînement linéaire

(30) Priorität: 19.11.2004 DE 202004017769 U
(43) Veröffentlichungstag der Anmeldung: 24.05.2006
(73) Patentinhaber: Dewert Antriebs- und Systemtechnik GmbH, 32278 Kirchlengern (DE)
(72) Erfinder: Minnig, Peter, 32049 Herford (DE); Dück, Heinrich, 32339 Espelkamp (DE)
(74) Vertreter: Dantz, Jan Henning

(56) Entgegenhaltungen:
- FR-A1- 2 830 916
- FR-A1- 2 832 202
- US-A- 3 309 060
- US-A- 5 755 310

## Beschreibung

Die Erfindung bezieht sich auf einen Linearantrieb zum Verstellen von wenigstens einem beweglichen Bauteil, der mit mindestens einem Spindeltrieb ausgestattet ist, auf dessen rotierend antreibbare Spindel eine gegen Drehung gesicherte Hubmutter und mindestens eine gegen Drehung gesicherte Sicherheitsmutter aufgesetzt ist, und bei dem die Hubmutter mit einem beweglichen Bauteil gekoppelt ist, dass die Hubmutter und die Sicherheitsmutter verbindungslos zueinander angeordnet sind dass die Sicherheitsmutter aus einer auf die Spindel aufgesetzten Innenmutter und einem darauf aufgesetzten äußeren Führungsring besteht, dass die Innenmutter und der Führungsring durch Formschlussbauteile derart miteinander gekoppelt sind, dass mindestens ein Formschlussbauteil derart konstruktiv ausgelegt ist, dass bei einem vorgegebenen Lastmoment die Formschlussbauteile außer Eingriff bringbar sind.

Der in Rede stehende Linearantrieb ist besonders zum Verstellen der beweglichen Bauteile eines Möbels, beispielsweise eines Lattenrostes oder eines Sessels, ausgelegt. Derartige Linearantriebe sind entweder sogenannte Einzelantriebe mit einem Spindeltrieb und einem Antriebsmotor oder sogenannte Doppelantriebe mit zwei Spindeltrieben, die entweder von einem Motor oder von zwei Motoren antreibbar sind. Die Spindel jedes Spindeltriebes wird in der Normalausführung von einem Gleichstrommotor über ein Drehzahlreduziergetriebe angetrieben. Bevorzugt werden zur Reduzierung der Motordrehzahl Schneckentriebe verwendet.

Es handelt sich bei den Linearantrieben um Massenprodukte, die äußerst preiswert hergestellt werden sollen. Die Spindel jedes Spindeltriebes ist üblicherweise aus Stahl gefertigt, während die Hubmutter aus einem Kunststoff besteht. Die Hubmutter ist deshalb als ein Verschleißteil anzusehen, so dass nach Überschreiten einer bestimmten Betriebsdauer oder nach permanentem Überschreiten einer zulässigen Kraft damit zu rechnen ist, dass sie verschlissen ist. Dies würde jedoch dazu führen, dass das zu verstellende Bauteil schlagartig abgesenkt bzw. in Richtung der wirkenden Last verstellt würde, was für den Benutzer unangenehm wäre. Deshalb sind Lösungen bekannt, bei denen auf jede Spindel eine Sicherheitsmutter zusätzlich aufgesetzt ist. Diese Sicherheitsmutter verhindert, dass die Hubmutter auf der Spindel unkontrolliert entlang gleitet, da sie sinngemäß als Anschlag wirkt. Es ist deshalb möglich, dass das angeschlossene Bauteil noch mit der relativ geringen Geschwindigkeit abgesenkt wird. Die Sicherheitsmutter ist jedoch so ausgelegt, dass ein Anheben und somit ein Betrieb entgegen der Richtung der wirkenden Last des angeschlossenen Bauteils nicht möglich ist. Der Normalbetrieb ist erst wieder dann möglich, wenn die Hubmutter ausgewechselt ist.

Um zu verhindern, dass der Antrieb mit der Sicherheitsmutter weiterbetrieben werden kann, ist es bekannt, dass die Sicherheitsmutter und die Hubmutter über Stege miteinander verbunden sind, wobei die Stege so ausgelegt sind, dass sie beim Versuch der Lastanhebung brechen. Diese Lösung ist jedoch aufwendig, da im Falle des Auswechselns der Hubmutter die Sicherheitsmutter ebenfalls ausgetauscht werden muss. Es ist deshalb schon eine Lösung vorgeschlagen, bei der in konstruktiv aufwendiger Weise die Hubmutter durch eine Kupplungseinrichtung mit der Sicherheitsmutter gekoppelt ist. Diese Lösung ist aufgrund des konstruktiven Aufwandes nicht praxisgerecht.

Aus der US 5,755,310 A wird eine als Spindeltrieb ausgelegte Hubeinrichtung beschrieben, die besonders zum Anheben und Absenken relativ hoher Lasten, beispielsweise Pkws ausgelegt ist. Auf die rotierend antreibbare Spindel ist eine Hubmutter aufgesetzt, die einem Führungsrohr geführt ist. Die Hubmutter ist über einen Führungsring mit einer Sicherheitsmutter verbunden, die im Abstand zur Hubmutter steht. Die Sicherheitsmutter ist über Formschlussbauteile mit dem Führungsring verbunden. Diese Formschlussbauteile bestehen im Wesentlichen aus drei winkelförmigen Nuten, wobei der vertikale Bereich der Winkelnuten entgegen der Last in Verfahrrichtung der Hubmutter zeigt.

Im Normalbetriebszustand greift in den vertikalen Abschnitt jeder Winkelnut ein Stift ein, der durch eine Druckfeder belastet ist. Dieser Stift und die Druckfeder sind in einem radial verlaufenden Kanal des Führungsringes angeordnet, wobei dieser Kanal durch einen Gewindestopfen verschlossen ist. In diesem Normalbetriebszustand ist die Sicherheitsmutter durch die Stifte gegen Verdrehung gesichert.

Ist jedoch die Hubmutter beschädigt, wird durch die einwirkende Last die Sicherheitsmutter in Richtung zur Hubmutter verfahren, wobei die der Hubmutter zugewandte Stirnfläche ein Axiallager kontaktiert. Dabei gelangt jeder Stift in den horizontalen Bereich der Winkelnut und bei Drehung der Sicherheitsmutter gelangt das zugeordnete Ende jedes Stiftes in eine umlaufende Nut des Führungsringes. Die Sicherheitsmutter ist dann gegenüber der Spindel frei drehbar, so dass eine Verstellung unterbrochen ist.

In einem solchen Fall muss die Hubmutter ausgetauscht werden. Aufgrund der Konstruktion der Verbindungen der Hubmutter mit dem Führungsring und durch das Zusammenwirken mit den Formschlussbauteilen ist diese Montage recht aufwändig. Dieser Nachteil ist jedoch in Kauf zu nehmen, da es sich bei der vorbekannten Hubeinrichtung um hoch belastbare Einrichtungen handelt, wobei die entsprechenden Bauteile aus ebenfalls hoch belastbaren Werkstoffen gefertigt sind.

Der Erfindung liegt die Aufgabe zugrunde, einen Linearantrieb der eingangs näher beschriebenen Art so zu gestalten, dass für das Zusammenwirken der Hubmutter mit der Sicherheitsmutter eine konstruktiv einfache Lösung gegeben ist, und dass ausschließlich die Hubmutter auszutauschen ist, wobei die Montage in einfacher Weise durchgeführt werden kann.

Gemäß einem ersten Vorschlag wird die gestellte Aufgabe gelöst, indem die Hubmutter und die Sicherheitsmutter verbindungslos zueinander angeordnet sind, dass die Sicherheitsmutter aus einer auf die Spindel aufgesetzte Innenmutter und einem darauf aufgesetzten äußeren Führungsring besteht, dass die Innenmutter und der Führungsring durch Formschlussbauteile derart miteinander gekoppelt sind, dass mindestens ein Formschlussbauteil derart konstruktiv ausgelegt ist, dass bei einem vorgegebenen Lastmoment die Formschlussbauteile außer Eingriff bringbar sind.

Im Normalbetrieb des Linearantriebes, das heißt, bei unverschlissener Hubmutter steht diese in keinerlei Verbindung mit der Sicherheitsmutter. Ist jedoch die Hubmutter verschlissen, kann sie sich auf der Spindel nur mit der durch die Drehzahl der Spindel vorgegebenen Geschwindigkeit bewegen, da auch die Sicherheitsmutter mit dieser Lineargeschwindigkeit verfahren wird. Beim Absenken einer Last ist das Lastmoment deutlich geringer als beim Anheben des angeschlossenen Möbelbauteils. Die Innenmutter und der Führungsring sind über die Formschlussbauteile so miteinander verbunden, dass ein Absenken der Last möglich ist, dass jedoch bei Umkehrung der Drehrichtung zum Anheben der Last dieser Formschluss aufgehoben wird. Es kann sich dann die Innenmutter gegenüber dem äußeren Führungsring verdrehen, so dass eine Bewegung auf der Spindel nicht mehr möglich ist.

In einer bevorzugten Ausführungsform ist vorgesehen, dass die formschlüssige Verbindung zwischen der Innenmutter und dem äußeren Führungsring durch Zerstörung von mindestens einem Formschlussbauteil aufgelöst wird. Diese Zerstörung erfolgt im Normalfall, wenn versucht wird, das angeschlossene Möbelbauteil mit dem dann notwendigen Lastmoment entgegen der Last zu verfahren bzw. hochzufahren. Eine konstruktiv einfache Lösung ist gegeben, wenn die Formschlussbauteile durch wenigstens eine Federzunge und eine entsprechende Anzahl von Aussparungen derart gebildet sind, dass die jeweilige Federzunge in die zugehörige Aussparung eingreift. Im Normalbetrieb wird die Sicherheitsmutter ausschließlich durch das sich aus der Reibung der Gewindegänge ergebende Drehmoment belastet. Die Federzunge bzw. die Federzungen sind so ausgelegt, dass ein Absenken des angeschlossenen Möbelbauteiles problemlos möglich ist, dass jedoch beim Wechsel der Drehrichtung der Spindel es zum Bruch der Federzunge oder der Federzungen oder zum Überzahnen kommt. Beim Überzahnen wird eine Verzahnung oder Profilierung durch die Federzunge bzw. die Federzungen übersprungen.

Eine besonders einfache Lösung ist gegeben, wenn jede Federzunge durch einen Einschnitt in der äußeren Führungshülse gebildet ist, und dass jede Federzunge in eine Ausnehmung eingreift, die die Innenmutter aufweist. Die Aussparung erstreckt sich von der äußeren Umfangsfläche der Innenmutter nach innen. Da die äußere Führungshülse aus einem Kunststoff im Spritzgussverfahren gefertigt ist, lässt sich durch eine entsprechende Auslegung des Werkzeuges die Formgebung erreichen. Dabei werden die form- und materialfedernden Eigenschaften von Kunststoffen ausgenutzt.

In einer anderen Ausführung ist vorgesehen, dass zur Bildung eines Reibmomentes zwischen der Innenmutter und dem Führungsring der Führungsring elastisch verformbar ist. Dadurch wird eine Reibmoment gebildet, welches so groß ist, dass im Normalbetrieb der Führungsring und die Innenmutter feststehen. Kommt es jedoch zum Bruch der Mutter, wird das Reibmoment überwunden, so dass der Führungsring nach wie vor feststeht, die Innenmutter sich jedoch mitdreht. Im Normalbetrieb reicht das Reibmoment aus, um die Innenmutter gegen Verdrehung zu sichern. Die Elastizität kann beispielsweise dadurch erreicht werden, indem die Innenfläche des Führungsringes eine von der Kreisform abweichende Form hat, oder anders ausgedrückt, dass zumindest die Innenfläche unrund ist. Dabei gibt es, in radialer Richtung gesehen, Bereiche, in denen im ungespannten Zustand der Durchmesser der Innenfläche kleiner ist als der Außendurchmesser der Innenmutter. Bei dieser Ausführung steht der Führungsring ständig unter Spannung, das heißt, er ist verformt.

Die Elastizität kann jedoch auch erreicht werden, indem der elastische Führungsring einen sich über seine gesamte Länge erstreckenden Längsschlitz aufweist, und dass an der Innenfläche des Führungsringes gegenüber dieser vorstehende Profilierungen angesetzt oder angeformt sind, die in entsprechend gestaltete Vertiefungen der Innenmutter eingreifen. Dadurch wird zwischen dem Führungsring und der Innenmutter ein Formschluss erzielt, wobei dieser Formschluss so ausgelegt ist, dass beim Überschreiten eines bestimmtes Drehmomentes sich der Führungsring weitet, so dass sich die Innenmutter auf der Spindel verdrehen kann. Diese Ausführung bietet den Vorteil, dass es zu keinem Bruch von Bauteilen kommt. Die Profilierungen können scharfkantige Stege oder abgerundete Wülste sein, die so ausgelegt sind, dass beim Überschreiten eines Drehmomentes die Verbindung zwischen dem Führungsring und der Innenmutter gelöst wird. Sofern die Profilierungen scharfkantige Stege sind, können diese ausgelegt sein, dass sie beim Überschreiten des zulässigen Drehmomentes brechen oder dass sich der Führungsring leicht weitet, so dass eine Wulst in eine weitere Ausnehmung der Innenmutter eingreifen kann. In einer weiteren Ausführung ist es möglich, dass der Führungsring gegenüber der Innenmutter in Längsrichtung der Spindel verschiebbar ist, wobei die der Hubmutter zugewandte Stirnfläche gegenüber der zugeordneten Stirnfläche der Innenmutter vorsteht. Kommt es zum Bruch der Mutter verschiebt diese den Führungsring solange in Längsrichtung der Spindel, bis dass die Hubmutter an der Innenmutter anliegt. Dabei sollte es zum Bruch von wenigstens einem Kupplungssteg oder einer Federzunge kommen.

Bezogen auf den funktionsfähigen Zustand der Hubmutter steht diese im Abstand zur Sicherheitsmutter, das heißt, zwischen den einander zugewandt liegenden Stirnflächen wird ein vorgegebener Abstand eingehalten. Kommt es zum Bruch der Gewindegänge der Hubmutter, trifft diese auf die Sicherheitsmutter, welche dann die Funktion ausschließlich zum Absenken des angeschlossenen Möbelbauteiles übernimmt. Der Abstand zwischen der Hubmutter und der Sicherheitsmutter sollte, bezogen auf die Länge der beiden Muttern, relativ gering sein. In weiterer Ausgestaltung kann zum Schutz der Sicherheitsmutter noch vorgesehen sein, dass zwischen der Hubmutter und der Sicherheitsmutter eine Distanzscheibe angeordnet ist, die aus einem metallischen Material besteht, beispielsweise aus Stahl. Diese Scheibe kann eben, tellerförmig oder wellenförmig gestaltet sein und, bezogen auf die Längsachse der Spindel, eine elastisch federnde Eigenschaft aufweisen. In einer weiteren Ausführung kann ein federnder oder starrer Ring oder eine federnde oder starre Scheibe mindestens einseitig eine Art Verzahnung aufweisen. Bezogen zur Rotationsachse der Spindel kann die Verzahnung symmetrisch oder asymmetrisch gestaltet sein, so dass sich die Spitzen der Verzahnung auf mindestens eine der Muttern abstützt oder sich leicht in die Mutter eingräbt. Dabei können die Winkel der Verzahnungen so gewählt sein, dass bei Beaufschlagung einer Kraft in Längsrichtung der Spindel sich die Scheibe in einer Drehrichtung relativ zu der Mutter leichter verdrehen lässt.

In einer weiteren Ausführungsform ist der Führungsring mit der Innenmutter über Stege mit der Innenmutter verbunden. Dabei stehen der Führungsring und die Innenmutter der Länge nach im Versatz zueinander. Bei einem Bruch der Gewindegänge der Hubmutter setzt die Hubmutter zunächst auf den Führungsring auf. Bei einer erhöhten Krafteinwirkung auf den Führungsring verschiebt die defekte Hubmutter den Führungsring solange, bis dass die Hubmutter vollständig an der Innenmutter anliegt. Während dieser Relativbewegung zwischen Führungsring und Innenmutter wird die Verbindung in Rotationsrichtung zwischen dem Führungsring und der Innenmutter gelöst. Dies kann beispielsweise dadurch erfolgen, dass die Verbindungsstege zwischen dem Führungsring und der Innenmutter brechen oder dass sich federnde Stege aushaken.

Die Hubmutter und die Innenmutter der Sicherheitsmutter sind in bevorzugter Ausführung im Querschnitt kreisringförmig gestaltet, es sind jedoch an der Außenfläche noch Führungs- und Schaltnocken angeformt, wie noch beschrieben wird. Die Hubmutter weist zwei Abschnitte mit unterschiedlichen Querschnitten auf. Dabei ist vorgesehen, dass wenigstens ein Führungssteg und ein Schaltnocken an dem Abschnitt mit den größeren äußeren Abmessungen angeformt ist, wobei der Schaltnocken zumindest die erste Endstellung und gegebenenfalls auch die zweite Endstellung des angeschlossenen Möbelbauteiles begrenzt. Am äußeren Umfang des Führungsringes der Sicherheitsmutter ist ebenfalls mindestens ein Führungssteg und ein Schaltnocken zur Begrenzung der zweiten Stellung des Möbelbauteils angeformt.

Eine zuvor beschriebene Ausführung ist für einen sogenannten Druckantrieb ausgelegt, das heißt, das Möbelbauteil wird verstellt, wenn die Hubmutter entgegen der Last, beispielsweise in Richtung des freien Endes der Spindel, verfahren wird. Die Sicherheitsmutter ist bei einem solchen Antrieb an der dem Drehzahlreduziergetriebe zugewandten Seite der Hubmutter und somit in Lastrichtung hinter der Hubmutter angeordnet.

Eine weitere Ausführungsform sieht eine Anordnung mit zwei Sicherheitsmuttern vor, wobei auf jeder Seite der Hubmutter eine Sicherheitsmutter angeordnet ist. Diese Ausführung ist besonders vorteilhaft, wenn der Linearantrieb so ausgelegt ist, dass er als Druck- und Zugantrieb arbeitet.

In bevorzugter Ausführung ist der Linearantrieb so ausgelegt, dass auf die Hubmutter ein Arbeitsrohr fest aufgesetzt ist. Dieses Arbeitsrohr wird üblicherweise als Hubrohr bezeichnet, sofern der Linearantrieb als Druckantrieb gestaltet ist. In bevorzugter Ausführung ist dann auf das freie Ende des Hubrohres ein Gabelkopf aufgesetzt, um die Verbindung mit einem Möbelbauteil herzustellen. Sofern es sich um einen Zugantrieb handelt, ist noch vorgesehen, dass die Hubmutter, bezogen auf die in Längsrichtung der Spindel einwirkenden Last, vor der Sicherheitsmutter angeordnet ist, das heißt, die Sicherheitsmutter liegt an der Seite der Hubmutter, die dem Drehzahlreduziergetriebe zum Antrieb der Spindel abgewandt liegt.

Anhand der beiliegenden Zeichnungen wird die Erfindung noch näher erläutert. Es zeigen:
- Figur 1: einen erfindungsgemäßen Linearantrieb in Form eines Einzelantriebes im Aufriss;
- Figur 2: den Linearantrieb gemäß der Figur 1 im Mittellängsschnitt im betriebsfähigen Zustand;
- Figur 3: eine der Figur 2 entsprechende Darstellung, jedoch mit defekter Hubmutter;
- Figur 4: die Hubmutter und die Sicherheitsmutter in einer ersten Ausführung in sprengbildlicher Darstellung;
- Figur 5: eine der Figur 4 entsprechende Darstellung, jedoch mit zusammengefügter Sicherheitsmutter;
- Figur 6: eine gedrehte Ansicht zu der Ausführung gemäß der Figur 5;
- Figuren 7 bis 9: die Hub- und Sicherheitsmutter in einer zu den Figuren 4 bis 6 ausgeführten Variante.

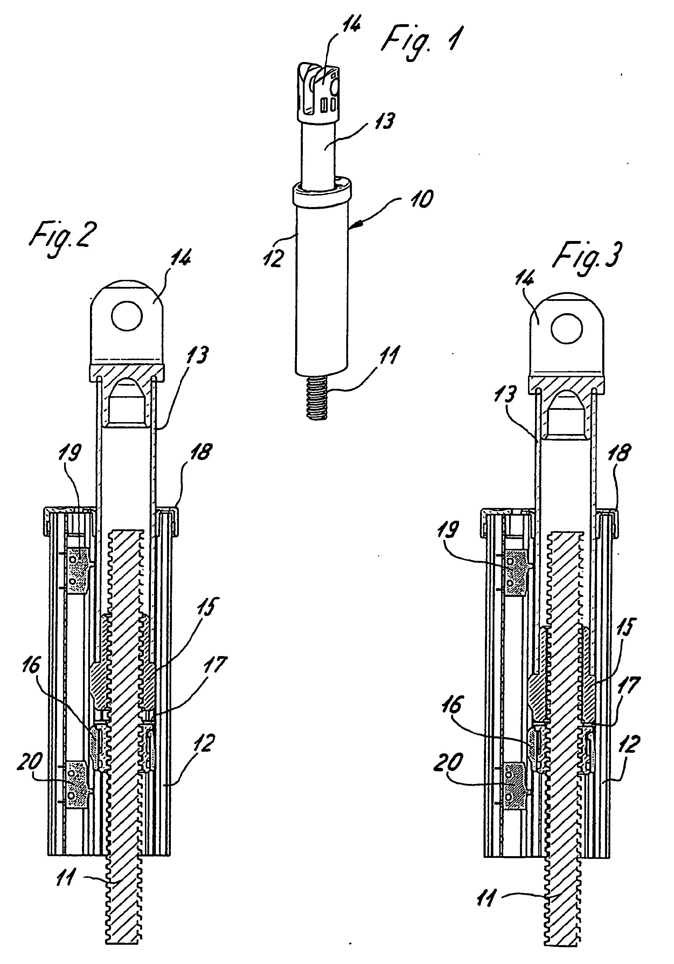

Aus Gründen der vereinfachten Darstellung ist in der Figur 1 nur der der rotierend antreibbaren Spindel 11 zugeordnete Bereich dargestellt. Die Spindel 11 ist mit einem Drehzahlreduziergetriebe antriebstechnisch gekoppelt, welches von einem Gleichstrommotor angetrieben wird. Der Linearantrieb 10 enthält ein fest mit dem den Motor und das Drehzahlreduziergetriebe aufnehmenden Gehäuse fest verbundenes Flanschrohr 12 und ein ausfahrbares Hubrohr 13, auf dessen freies Ende ein Gabelkopf 14 aufgesetzt ist, um die Kopplung mit einem ebenfalls nicht dargestellten Möbelbauteil herstellen zu können. Auf die Spindel 11 ist eine Hubmutter 15 und eine dazu beabstandete Sicherheitsmutter 16 aufgesetzt. Den normalen Betriebszustand zeigt die Figur 2. Danach ist der Abstand zwischen der Hubmutter 15 und der Sicherheitsmutter 16 deutlich geringer als die Länge der Hubmutter 15 bzw. der Sicherheitsmutter 16.

Zwischen der Hubmutter 15 und der Sicherheitsmutter 16 ist in den dargestellten Ausführungsbeispielen noch eine Distanzscheibe 17 angeordnet, die aus Metall, insbesondere aus Stahl gefertigt ist. Das Flanschrohr 12 ist in der allgemein bekannten Ausführung gestaltet, so dass die Hubmutter 15 und die Sicherheitsmutter 16 gegen Drehung gesichert sind. Dazu ist die Hubmutter 15 und die Sicherheitsmutter 16 noch mit Führungsstegen oder Führungsnocken versehen, wie noch erläutert wird. Auf das freie Ende des Flanschrohres 12 ist noch eine Endkappe 18 aufgesetzt, die mit einer Bohrung versehen ist, um das Hubrohr 13 zu führen. In dem Flanschrohr 12 sind noch zwei Endschalter 19, 20 eingesetzt, um die Endstellungen der Hubmutter 15 und der Sicherheitsmutter 16 bzw. des zu verstellenden Möbelbauteiles zu begrenzen. Die Spindel 11 ist im Normalfall aus Stahl gefertigt, während die Hubmutter 15 und die Sicherheitsmutter 16 aus Kunststoff bestehen. Solange die Sicherheitsmutter 16 im Abstand zur Hubmutter 15 steht, wird von der Sicherheitsmutter 16 kein Lastmoment übertragen. Kommt es nach einer längeren Betriebszeit des Linearantriebes 10 zur einer Funktionsunfähigkeit der Hubmutter 15, rutscht diese in Längsrichtung der Spindel 11 in Richtung zur Sicherheitsmutter 16 und kontaktiert diese bzw. die Distanzscheibe 17. Dies erfolgt durch das Gewicht des angeschlossenen Möbelbauteiles. In diesem Falle übernimmt nunmehr die Sicherheitsmutter 16 die Funktion der Hubmutter 15, so dass das angeschlossene Möbelbauteil mit einer Geschwindigkeit abgesenkt wird, die sich aus der Drehzahl der Spindel 11 und der Steigung ergibt. Ist die untere Endstellung erreicht, das heißt, der Endschalter 20 wird betätigt, kann die Sicherheitsmutter 16 nicht in die entgegengesetzte Richtung bei entsprechender Drehung der Spindel 11 verfahren werden, wie noch näher erläutert wird.

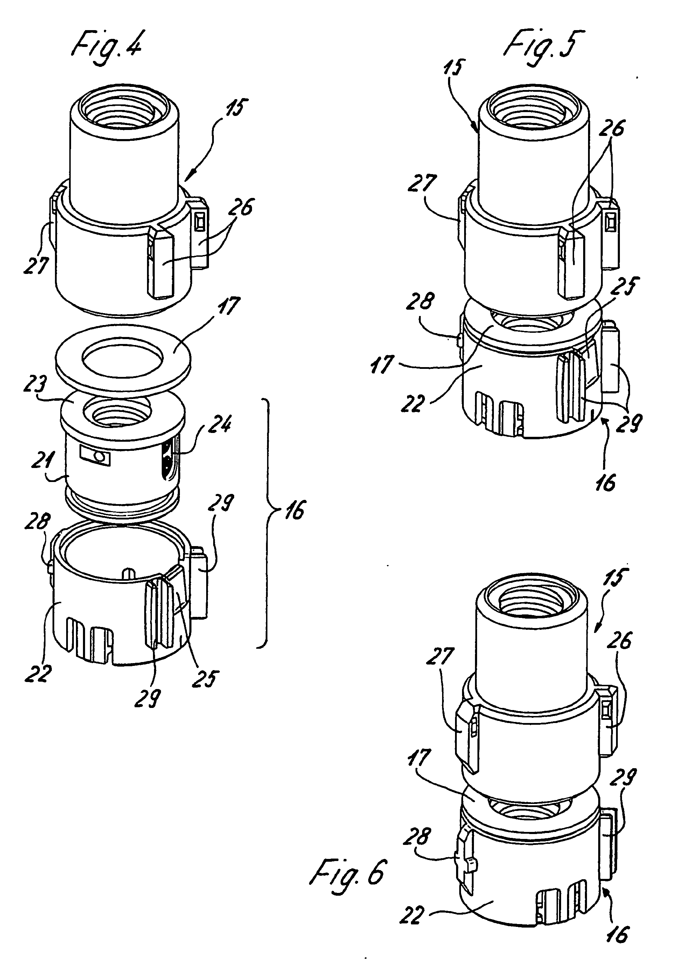

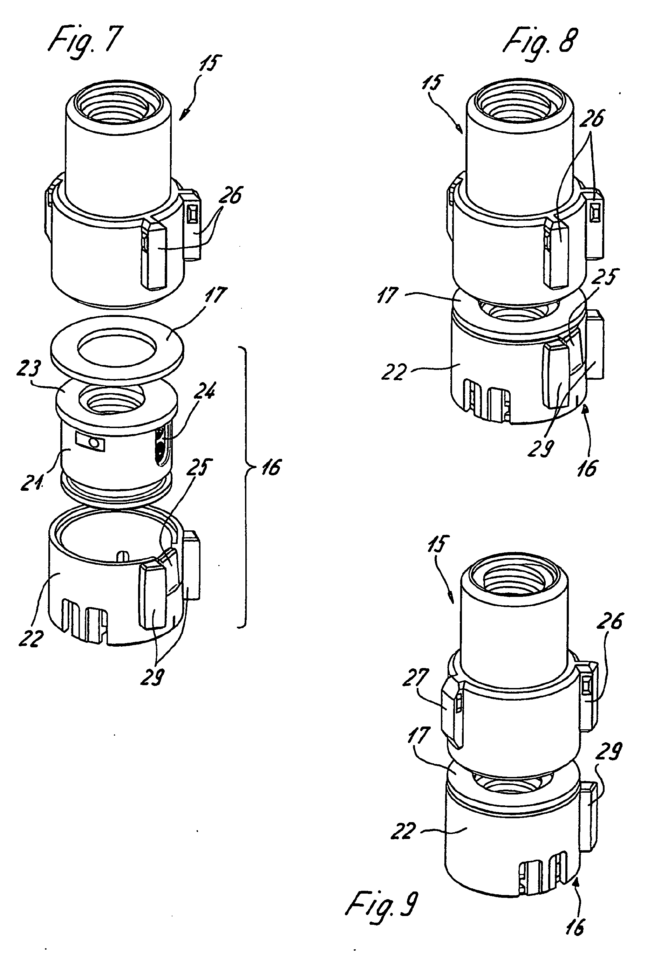

Wie besonders die Figuren 4 und 7 zeigen, besteht jede Sicherheitsmutter 16 aus einer Innenmutter 21 und einem äußeren Führungsring 22, der die Innenmutter 21 schließend umgibt. Die Innenmutter 21 hat an der der Hubmutter 15 zugewandten Stirnseite einen im Durchmesser größeren Bund 23, dessen Außendurchmesser mit dem Außendurchmesser der Distanzscheibe 17 übereinstimmt oder annähernd übereinstimmt, wie die Figuren 5 und 6 zeigen. Die Innenmutter 21 ist außerdem mit einer Tasche oder einer Ausnehmung 24 versehen, die sich von der Außenfläche nach innen erstreckt. In diese Ausnehmung 24 greift im montierten Zustand eine Federzunge 25 ein, die durch einen Einschnitt in den Mantel des Führungsringes 22 gebildet ist. Die Ausnehmung 24 und die Federzunge 25 bilden die Formschlussbauteile des Linearantriebes 10. Im zusammengeführten Zustand greift die Federzunge 25 in die Ausnehmung 24 ein, so dass die Innenmutter 21 mit dem Führungsring 22 formschlüssig verbunden ist. Die Hubmutter 15 ist im mittleren Bereich abgesetzt, so dass ein Abschnitt mit einem geringeren Durchmesser entsteht, der der Sicherheitsmutter 16 abgewandt liegt. Der im Durchmesser größer gehaltene Abschnitt liegt demzufolge der Sicherheitsmutter 16 zugewandt. Dieser Abschnitt ist mit Führungsstegen 26 versehen, die in entsprechende Längsnuten des Flanschrohres 12 eingreifen, so dass die Hubmutter 15 gegen Drehung gesichert ist. Ferner ist noch an dem Abschnitt des größeren Durchmessers ein Schaltnocken 27 angeformt, der zur Begrenzung der oberen Endstellung den Endschalter 19 betätigt. An dem Führungsring 22 ist ebenfalls ein Schaltnocken 28 angeformt, der zur Begrenzung der unteren Endstellung den Endschalter 20 betätigt. Ferner sind an dem Führungsring 22 noch Führungsstege 29 angeformt, damit auch die Sicherheitsmutter 16 gegen Drehung gesichert ist.

Die Figur 5 zeigt die Einbaustellung der Hubmutter 15 gegenüber der Sicherheitsmutter 16. In dieser Stellung greift die Federzunge 25 in die Ausnehmung 24 ein. Da die Sicherheitsmutter 16 in der normalen Betriebsstellung der Hubmutter 15 funktionslos ist, hält die aus der Federzunge 25 und der Ausnehmung 24 gebildete formschlüssige Verbindung. Die Federzunge 25 ist so ausgelegt, dass auch das angeschlossene Möbelbauteil abgesenkt werden kann, wenn die Hubmutter 15 gemäß der Figur 3 funktionsunfähig ist. Soll jedoch das Möbelbauteil angehoben werden, wird über die Innenmutter 21 ein erhöhtes Drehmoment übertragen, welches die Federzunge 25 über den Führungsring 22 auf das Flanschrohr 12 ableitet. Dieses Drehmoment ist jedoch so hoch, so dass die Federzunge 25 entweder zerstört wird oder federnd nachgibt und mit der Ausnehmung 24 außer Eingriff gerät. Dadurch dreht sich die Innenmutter 21 entsprechend der Drehzahl der Spindel 11, so dass das Möbelbauteil zumindest entgegen der Last sich nicht mehr verstellen kann. Die Figur 6 zeigt die Sicherheitsmutter 16 und die Hubmutter 15 in einer leicht gedrehten Stellung, so dass die Schaltnocken 27, 28 sichtbar werden. Aus der Figur 6 geht hervor, dass der Schaltnocken 28 zur Betätigung des Endschalters 20 kreuzförmig gestaltet ist.

Die Ausführung gemäß den Figuren 7 bis 9 entspricht im wesentlichen der Ausführung gemäß den Figuren 4 bis 6, doch fehlt an dem Führungsring 22 der Sicherheitsmutter 16 der Schaltnocken 28. Damit soll verdeutlicht werden, dass die untere Endstellung der Hubmutter 15 bzw. des angeschlossenen Möbelbauteils auch anderweitig bestimmt werden kann, so dass die Hubmutter 15 sowohl den Endschalter 19 als auch den Endschalter 20 betätigen kann.

Die Erfindung ist nicht auf die dargestellten Ausführungsbeispiele beschränkt. Wesentlich ist, dass die Hubmutter 15 mit der Sicherheitsmutter 16 nicht verbunden ist. Gemäß der ersten Lösung ist von Bedeutung, dass die Sicherheitsmutter 16 aus der Innenmutter 21 und dem äußeren Führungsring 22 besteht, die im Normalbetriebszustand formschlüssig durch die Ausnehmung 24 und die Federzunge 25 verbunden sind, und dass im Falle der Funktionsunfähigkeit der Hubmutter 15 diese formschlüssige Verbindung gelöst wird, so dass sich die Innenmutter 21 bei Drehung der Spindel 11 entgegen der Lastrichtung drehen kann. Gemäß der zweiten Lösung ist von Bedeutung, dass an der Sicherheitsmutter 16 ein in einem Längsschlitz 30 des Hubrohres 13 geführter Federsteg 31 eingreift, um im Normalbetriebszustand eine Drehung der Sicherheitsmutter 16 zu verhindern, dass es jedoch bei einer Funktionsunfähigkeit der Hubmutter 15 zum Bruch oder außer Eingriff des Federsteges 31 kommt, wenn das zu übertragende Lastmoment größer ist als es zum Absenken des Möbelbauteils erforderlich ist.

Unabhängig von der Ausführung der Sicherheitsmutter 16 ist die Hubmutter 15 immer in Wirkrichtung der entlang der Spindel 11 verlaufenden angreifenden Last vor der Sicherheitsmutter 16 angeordnet.

Eine weitere Ausführungsform sieht eine Anordnung mit zwei Sicherheitsmuttern 16 vor, wobei auf jeder Seite der Hubmutter 15 eine Sicherheitsmutter 16 angeordnet ist. Weiterhin kann entsprechend der Figuren ein zu verstellendes Möbelbauteil indirekt und über ein Hubrohr 13 und gegebenenfalls über einen auf das Hubrohr 13 aufgesetzten Gabelkopf 14 an der Hubmutter 15 angelenkt sein. In einer anderen Ausfiihrungsform kann das zu verstellende Möbelbauteil auch direkt an der Hubmutter 15 angelenkt sein. Dabei kann in vorteilhafter Weise die Hubmutter 15 ebene Flächen aufweisen, die parallel zur Mittellängsachse der Spindel 11 angeordnet sind und gegebenenfalls Zapfen oder Bohrungen aufweisen, die senkrecht zu diesen Flächen stehen.

### Bezugszeichen

- 10: Linearantrieb
- 11: Spindel
- 12: Flanschrohr
- 13: Hubrohr
- 14: Gabelkopf
- 15: Hubmutter
- 16: Sicherheitsmutter
- 17: Distanzscheibe
- 18: Endkappe
- 19,20: Endschalter
- 21 1: Innenmutter
- 22: Führungsring
- 23: Bund
- 24: Ausnehmung
- 25: Federzunge
- 26: Führungsstege
- 27,28: Schaltnocken
- 29: Führungsstege

## Patentansprüche

1. Linearantrieb (10) zum Verstellen von wenigstens einem beweglichen Bauteil, der mit mindestens einem Spindeltrieb ausgestattet ist, auf dessen rotierend antreibbare Spindel (11) eine gegen Drehung gesicherte Hubmutter (15) und mindestens eine gegen Drehung gesicherte Sicherheitsmutter (16) aufgesetzt und bei dem die Hubmutter (15) mit einem beweglichen Bauteil gekoppelt ist, wobei die Sicherheitsmutter (16) aus einer auf die Spindel (11) aufgesetzte Innenmutter (21) und einem darauf aufgesetzten äußeren Führungsring (22) besteht, dass die Innenmutter (21) und der Führungsring (22) durch Formschlussbauteile (24, 25) derart miteinander gekoppelt sind, dass mindestens ein Formschlussbauteil (25) derart konstruktiv ausgelegt ist, dass bei einem vorgegebenen Lastmoment die Formschlussbauteile (24, 25) außer Eingriff bringbar sind, **dadurch gekennzeichnet, dass** die Hubmutter (15) und die Sicherheitsmutter (16) verbindungslos zueinander angeordnet sind.

2. Linearantrieb nach Anspruch 1, **dadurch gekennzeichnet, dass** die Formschlussbauteile (24, 25) durch Zerstörung von mindestens einem Formschlussbauteil (25) außer Eingriff bringbar sind.

3. Linearantrieb nach Anspruch 2, **dadurch gekennzeichnet, dass** die Formschlussbauteile durch wenigstens eine Federzunge (25) und eine entsprechende Anzahl von Ausnehmungen (24) derart gebildet sind, dass die jeweilige Federzunge (25) in die zugehörige Ausnehmung (24) eingreift.

4. Linearantrieb nach Anspruch 3, **dadurch gekennzeichnet, dass** jede Federzunge (25) durch einen Einschnitt in dem äußeren Führungsring (22) gebildet ist, und dass jede Federzunge (25) in eine zugehörige Aussparung (24) eingreift.

5. Linearantrieb nach Anspruch 1, **dadurch gekennzeichnet, dass** zur Bildung eines Reibmomentes zwischen dem Führungsring (22) und der Innenmutter (21) der Führungsring (22) elastisch verformbar ist.

6. Linearantrieb nach Anspruch 5, **dadurch gekennzeichnet, dass** die Innenfläche des unverformten Führungsringes (22) eine von der Kreisform abweichende Form hat, wobei in radialer Richtung gesehen, im unverformten Zustand der Innendurchmesser des Führungsringes (22) bereichsweise kleiner ist als der Außendurchmesser der Innenmutter (21)

7. Linearantrieb nach Anspruch 5 oder 6, **dadurch gekennzeichnet, dass** der elastische Führungsring (22) einen sich über seine gesamte Länge erstreckenden Längsschlitz aufweist, und dass an der Innenfläche des Führungsringes (22) gegenüber dieser vorstehende Profilierungen angesetzt oder angeformt sind, die in entsprechend gestaltete Vertiefungen der Innenmutter (21) eingreifen.

8. Linearantrieb nach Anspruch 7, **dadurch gekennzeichnet, dass** der Führungsring (22) gegenüber der Innenmutter (21) verschiebbar ist, wobei die der Hubmutter (15) zugewandte Stirnfläche gegenüber der zugeordneten Stirnfläche der Innenmutter (21) vorsteht, bezogen auf den betriebsfähigen Zustand der Hubmutter (15).

9. Linearantrieb nach einem oder mehreren der vorhergehenden Ansprüche 1 bis 7, **dadurch gekennzeichnet, dass**, bezogen auf den funktionsfähigen Zustand der Hubmutter (15), die Hubmutter (15) im Abstand zur Sicherheitsmutter (16) steht.

10. Linearantrieb nach einem oder mehreren der vorhergehenden Ansprüche 1 bis 9, **dadurch gekennzeichnet, dass** zwischen der Hubmutter (15) und der Sicherheitsmutter (16) eine Distanzscheibe (17) angeordnet ist.

11. Linearantrieb nach Anspruch 6, **dadurch gekennzeichnet, dass** die Distanzscheibe (17) eben, tellerförmig oder wellenförmig derart gestaltet ist, dass, bezogen auf die Längsachse der Spindel (11), eine elastische oder federnde Wirkung erzielt ist.

12. Linearantrieb nach Anspruch 6, **dadurch gekennzeichnet, dass** die Distanzscheibe (17) als starrer oder federnder Ring bzw. Scheibe ausgebildet ist, und mindestens einseitig eine Verzahnung aufweist, die, bezogen auf die Rotationsachse der Spindel (11), symmetrisch oder asymmetrisch gestaltet ist.

13. Linearantrieb nach einem oder mehreren der vorhergehenden Ansprüche 1 bis 12, **dadurch gekennzeichnet, dass** der Führungsring (22) und die Innenmutter (21) in Längsrichtung der Spindel (11) im Versatz zueinander stehen, und dass der Führungsring (22) mit der Innenmutter (21) über Stege mit dieser verbunden ist.

14. Linearantrieb nach einem oder mehreren der vorhergehenden Ansprüche 1 bis 13, **dadurch gekennzeichnet, dass** die Hubmutter (15) und die Innenmutter (21) der Sicherheitsmutter (16) im Querschnitt kreisringförmig gestaltet sind.

15. Linearantrieb nach einem oder mehreren der vorhergehenden Ansprüche 1 bis 14, **dadurch gekennzeichnet, dass** die Hubmutter (15) aus zwei Abschnitten mit unterschiedlichen Querschnitten besteht, und dass an dem Abschnitt mit den größeren äußeren Abmessungen Führungsstege (26) und zumindest ein Schaltnocken (27) angeformt oder angesetzt sind.

16. Linearantrieb nach einem oder mehreren der vorhergehenden Ansprüche 1 bis 15, **dadurch gekennzeichnet, dass** die Sicherheitsmutter (16) an der dem Drehzahlreduziergetriebe zugewandten Seite der Hubmutter (15) bzw. in Lastrichtung hinter der Hubmutter (15) angeordnet ist.

17. Linearantrieb nach Anspruch 1, **dadurch gekennzeichnet, dass** beidseitig der Hubmutter (15) jeweils eine Sicherheitsmutter (16) auf der Spindel (11) angeordnet ist.

18. Linearantrieb nach einem oder mehreren der vorhergehenden Ansprüche 1 bis 17, **dadurch gekennzeichnet, dass** die Hubmutter (15) mit einem Arbeitsrohr (13), vorzugsweise einem Hubrohr, gekoppelt ist.

19. Linearantrieb nach einem oder mehreren der vorhergehenden Ansprüche 1 bis 18, **dadurch gekennzeichnet, dass** die Hubmutter (15) der in Längsrichtung auf die Spindel (11) einwirkenden Last vor der Sicherheitsmutter (16) angeordnet ist.

## Claims

1. Linear drive (10) for adjusting at least one moveable component and equipped with at least one spindle drive, of which the spindle (11), which can be driven in rotation, has a lifting nut (15), secured against rotation, and at least one safety nut (16), secured against rotation, positioned on it and in the case of which the lifting nut (15) is coupled to a movable component, wherein the safety nut (16) comprises an inner nut (21), positioned on the spindle (11), and an outer guide ring (22), positioned on the inner nut, and the inner nut (21) and the guide ring (22) are coupled to one another by form-fitting components (24, 25) such that at least one form-fitting component (25) is designed such that, in the case of a predetermined load moment, the form-fitting components (24, 25) can be disengaged, **characterized in that** the lifting nut (15) and the safety nut (16) are arranged in relation to one another without being connected.

2. Linear drive according to Claim 1, **characterized in that** the form-fitting components (24, 25) can be disengaged as a result of at least one form-fitting component (25) being destroyed.

3. Linear drive according to Claim 2, **characterized in that** the form-fitting components are formed by at least one resilient tongue (25) and a corresponding number of apertures (24) such that the respective resilient tongue (25) engages in the associated aperture (24).

4. Linear drive according to Claim 3, **characterized in that** each resilient tongue (25) is formed by an incision in the outer guide ring (22), and **in that** each resilient tongue (25) engages in an associated cutout (24).

5. Linear drive according to Claim 1, **characterized in that**, in order to form a moment of friction between the guide ring (22) and the inner nut (21), the guide ring (22) is elastically deformable.

6. Linear drive according to Claim 5, **characterized in that** the inner surface of the non-deformed guide ring (22) is non-circular in shape, wherein as seen in the radial direction, in the non-deformed state, the internal diameter of the guide ring (22) is smaller, in some regions, than the external diameter of the inner nut (21).

7. Linear drive according to Claim 5 or 6, **characterized in that** the elastic guide ring (22) has a longitudinal slot extending over its entire length, and **in that** profilings are attached to, or formed on, the inner surface of the guide ring (22), these profilings projecting in relation to this inner surface and engaging in appropriately configured depressions of the inner nut (21).

8. Linear drive according to Claim 7, **characterized in that** the guide ring (22) can be displaced in relation to the inner nut (21), wherein the end surface directed towards the lifting nut (15) projects in relation to the associated end surface of the inner nut (21), this being the case when the lifting nut (15) is in the operational state.

9. Linear drive according to one or more of preceding Claims 1 to 7, **characterized in that**, when the lifting nut (15) is in the functional state, the lifting nut (15) is spaced apart from the safety nut (16).

10. Linear drive according to one or more of preceding Claims 1 to 9, **characterized in that** a spacer plate (17) is arranged between the lifting nut (15) and the safety nut (16).

11. Linear drive according to Claim 6, **characterized in that** the spacer plate (17) is of planar, disc-like or undulating configuration such that elastic or resilient action is achieved in respect of the longitudinal axis of the spindle (11).

12. Linear drive according to Claim 6, **characterized in that** the spacer plate (17) is designed as a rigid or resilient ring or plate and has a toothing formation on at least one side, this toothing formation being configured symmetrically or asymmetrically in respect of the axis of rotation of the spindle (11).

13. Linear drive according to one or more of preceding Claims 1 to 12, **characterized in that** the guide ring (22) and the inner nut (21) are offset in relation to one another in the longitudinal direction of the spindle (11), and **in that** the guide ring (22) is connected to the inner nut (21) via crosspieces.

14. Linear drive according to one or more of preceding Claims 1 to 13, **characterized in that** the lifting nut (15) and the inner nut (21) of the safety nut (16) are of annular configuration in cross section.

15. Linear drive according to one or more of preceding Claims 1 to 14, **characterized in that** the lifting nut (15) comprises two portions with different cross sections, and **in that** guide cross pieces (26) and at least one switching cam (27) are formed on, or attached to, the portion with the larger outer dimensions.

16. Linear drive according to one or more of preceding Claims 1 to 15, **characterized in that** the safety nut (16) is arranged on that side of the lifting nut (15) which is directed towards the speed-reducing gear mechanism or is arranged downstream of the lifting nut (15), as seen in the load direction.

17. Linear drive according to Claim 1, **characterized in that** a safety nut (16) is arranged on the spindle (11) in each case on either side of the lifting nut (15).

18. Linear drive according to one or more of preceding Claims 1 to 17, **characterized in that** the lifting nut (15) is coupled to an operating tube (13), preferably a lifting tube.

19. Linear drive according to one or more of preceding Claims 1 to 18, **characterized in that** the lifting nut (15), in relation to the load acting longitudinally on the spindle (11), is arranged upstream of the safety nut (16).

## Revendications

1. Entraînement linéaire (10) servant à déplacer au moins un composant mobile, lequel entraînement linéaire est équipé d'au moins un entraînement à broche, sur la broche (11) duquel, pouvant être entraînée en rotation, sont posés un écrou de levage (15) protégé contre toute rotation et au moins un écrou de sécurité (16) protégé contre toute rotation et dans le cadre duquel l'écrou de levage (15) est couplé au composant mobile, sachant que l'écrou de sécurité (16) est composé d'un écrou intérieur (21) posé sur la broche (11) et d'une bague de guidage (22) extérieure posée sur celui-ci, sachant que l'écrou intérieur (21) et la bague de guidage (22) sont couplés l'un à l'autre par des composants à complémentarité de formes (24, 25) de telle manière que la structure d'au moins un composant à complémentarité de formes (25) est configurée de telle manière que dans le cas d'un couple résistant prédéfini, les composants à complémentarité de formes (24, 25) peuvent être mis hors d'engagement, **caractérisé en ce que** l'écrou de levage (15) et l'écrou de sécurité (16) sont disposés sans liaison l'un par rapport à l'autre.

2. Entraînement linéaire selon la revendication 1, **caractérisé en ce que** les composants à complémentarité de formes (24, 25) peuvent être mis hors d'engagement par la destruction d'au moins un composant à complémentarité de formes (25).

3. Entraînement linéaire selon la revendication 2, **caractérisé en ce que** les composants à complémentarité de formes sont formés par au moins une languette formant ressort (25) et un nombre correspondant d'évidement (24) de telle manière que la languette formant ressort (25) respective vient en prise avec l'évidement (24) associé.

4. Entraînement linéaire selon la revendication 3, **caractérisé en ce que** chaque languette formant ressort (25) est formée par une entaille dans la bague de guidage (22) extérieure, et **en ce que** chaque languette formant ressort (25) vient en prise avec un évidement (24) associé.

5. Entraînement linéaire selon la revendication 1, **caractérisé en ce que** pour former un moment de friction entre la bague de guidage (22) et l'écrou intérieur (21 ), la bague de guidage (22) peut être déformée élastiquement.

6. Entraînement linéaire selon la revendication 5, **caractérisé en ce que** la surface intérieure de la bague de guidage (22) non déformée présente une forme divergeant de la forme circulaire, sachant que, vu dans la direction radiale, à l'état non déformé, le diamètre intérieur de la bague de guidage (22) est plus petit par endroits que le diamètre extérieur de l'écrou intérieur (21).

7. Entraînement linéaire selon la revendication 5 ou 6, **caractérisé en ce que** la bague de guidage (22) élastique présente une fente longitudinale s'étendant sur toute sa longueur, et **en ce que** des profilages sont placés ou formés au niveau de la surface intérieure de la bague de guidage (22), lesquels profilages font saillie de ladite surface intérieure et viennent en prise avec des cavités de l'écrou intérieur (21), formées de manière correspondante.

8. Entraînement linéaire selon la revendication 7, **caractérisé en ce que** la bague de guidage (22) peut être déplacée par rapport à l'écrou intérieur (21), sachant que la surface frontale tournée vers l'écrou de levage (15) fait saillie par rapport à la surface frontale associée de l'écrou intérieur (21), par rapport à l'état de l'écrou de levage (15) apte au fonctionnement.

9. Entraînement linéaire selon l'une quelconque ou plusieurs des revendications précédentes 1 à 7, **caractérisé en ce que** par rapport à l'état opérationnel de l'écrou de levage (15), l'écrou de levage (15) se trouve à distance de l'écrou de sécurité (16).

10. Entraînement linéaire selon l'une quelconque ou plusieurs des revendications précédentes 1 à 9, **caractérisé en ce qu'**une rondelle d'écartement (17) est disposée entre l'écrou de levage (15) et l'écrou de sécurité (16).

11. Entraînement linéaire selon la revendication 6, **caractérisé en ce que** la rondelle d'écartement (17) est configurée de manière plate, de manière à présenter une forme de plateau ou une forme d'onde de telle manière que, par rapport à l'axe longitudinal de la broche (11), un effet élastique ou à ressorts est obtenu.

12. Entraînement linéaire selon la revendication 6, **caractérisé en ce que** la rondelle d'écartement (17) est réalisée comme une bague ou un disque rigide ou à ressorts et présente au moins d'un côté une denture, qui par rapport à l'axe de rotation de la broche (11), est configurée de manière symétrique ou de manière asymétrique.

13. Entraînement linéaire selon l'une quelconque ou plusieurs des revendications précédentes 1 à 12, **caractérisé en ce que** la bague de guidage (22) et l'écrou intérieur (21) sont décalés l'un par rapport à l'autre dans la direction longitudinale de la broche (11), et **en ce que** la bague de guidage (22) dotée de l'écrou intérieur (21) est reliée à ce dernier par l'intermédiaire de traverses.

14. Entraînement linéaire selon l'une quelconque ou plusieurs des revendications précédentes 1 à 13, **caractérisé en ce que** l'écrou de levage (15) et l'écrou intérieur (21) de l'écrou de sécurité (16) sont configurés de manière à présenter une forme d'anneau circulaire en section transversale.

15. Entraînement linéaire selon l'une quelconque ou plusieurs des revendications précédentes 1 à 14, **caractérisé en ce que** l'écrou de levage (15) est constitué de deux sections présentant diverses sections transversales, et **en ce que** des traverses de guidage (26) et au moins une came de commande (27) sont formées ou placées au niveau de la section présentant des dimensions extérieures plus grandes.

16. Entraînement linéaire selon l'une quelconque ou plusieurs des revendications précédentes 1 à 15, **caractérisé en ce que** l'écrou de sécurité (16) est disposé au niveau du côté de l'écrou de levage (15) tourné vers le réducteur de vitesse ou dans la direction de charge derrière l'écrou de levage (15).

17. Entraînement linéaire selon la revendication 1, **caractérisé en ce que** respectivement un écrou de sécurité (16) est disposé sur la broche (11) des deux côtés de l'écrou de levage (15).

18. Entraînement linéaire selon l'une quelconque ou plusieurs des revendications précédentes 1 à 17, **caractérisé en ce que** l'écrou de levage (15) est couplé à un tube de travail (13), de préférence à un tube de levage.

19. Entraînement linéaire selon l'une quelconque ou plusieurs des revendications précédentes 1 à 18, **caractérisé en ce que** l'écrou de levage (15) de la charge agissant sur la broche (11) dans la direction longitudinale est disposé avant l'écrou de sécurité (16).
